(19) Europäisches Patentamt
European Patent Office
Office européen des brevets

(11) **EP 0 826 759 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(51) Int Cl.$^7$: **C09K 3/18**

(21) Anmeldenummer: **97113884.7**

(22) Anmeldetag: **12.08.1997**

(54) **Gefrierschutz- und Eislösemittel**

Anti-freeze and de-icing composition

Agent antigel et déglaçant

(84) Benannte Vertragsstaaten:
**AT CH DE DK FI LI SE**
Benannte Erstreckungsstaaten:
**SI**

(30) Priorität: **26.08.1996 AT 152196**

(43) Veröffentlichungstag der Anmeldung:
**04.03.1998 Patentblatt 1998/10**

(73) Patentinhaber: **Lang & Co., chemisch-technische Produkte Kommanditgesellschaft A-3001 Mauerbach/Wien (AT)**

(72) Erfinder: **Kaes, Gertrude, Dipl.Ing. Kohlmarkt 1 (AT)**

(74) Vertreter: **Puchberger, Peter, Dipl.-Ing. et al Puchberger, Berger & Partner Singerstrasse 13 1010 Wien (AT)**

(56) Entgegenhaltungen:
**DE-A- 2 161 522          DE-A- 4 034 217**
**US-A- 4 358 389          US-A- 5 395 658**

## Beschreibung

Die Erfindung betrifft Gefrierschutz- und Eislösemittel mit einem Gehalt an gefrierpunkterniedrigenden, insbesondere chlorhaltigen, Substanzen als Auftaumittel. Weiters betrifft die Erfindung einen Zusatz für ein Auftaumittel und ein Verfahren zum Schutz von Flächen vor Vereisung oder zur Enteisung, wobei ein, insbesondere chlorhaltiges, Auftaumittel bevorzugt im Feuchtstreuverfahren aufgetragen wird.

Eislöse- und Gefrierschutzmittel werden zur Erniedrigung des Gefrierpunktes wässeriger Lösungen verwendet, um einerseits die Bildung von festem Eis zu verhindern und andererseits bereits gebildetes Eis zur Auflösung zu bringen. Als solche Auftaumittel sind anorganische Salze, wie Natriumchlorid, Magnesiumchlorid, Calciumchlorid, Kaliumphosphate, Natriumphosphate, Ammoniumphosphate, Ammoniumnitrat, Erdalkalinitrate, Magnesiumnitrat, Ammoniumsulfat, Alkalisulfate, sowie organische Verbindungen wie niedrigmolekulare Alkohole, Glykole, Lactate oder Harnstoff bekannt.

Neben der gefrierpunkterniedrigenden Wirkung auf Wasser ist beim Einsatz solcher Eislöse- und Gefrierschutzmittel die Frage der Korrosivität des Mittels auf verschiedene Werkstoffe sowie des Umweltschutzes von besonderer Bedeutung. Es ist bekannt, daß die bisher meistverwendeten, da billigsten Eislöse- und Gefrierschutzmittel das Natriumchlorid bzw. Calcium-/Magnesiumchlorid sind. Der Chlorgehalt bedingt in wässeriger Lösung sowohl starke Korrosion von Eisen und anderen metallischen Werkstoffen, Beton und Mauerwerk als auch Pflanzenschädigungen.

Der Chlorgehalt in Streusalzen oder Salzlösungen erschwert bekannterweise die Wasseraufnahme in den Wurzeln von Bäumen und niedrigen Pflanzen. Die Chloride wandern dann in die Blätter und verursachen dort Schädigungen. Die Blätter werden vom Rand her braun und fallen frühzeitig ab. Durch Regen und tauenden Schnee werden die Chloride aus den abgefallenen Blätter wieder ausgewaschen und der schädigende Chloridkreislauf beginnt von Neuem. Auf diese Art und Weise kommt es zu einer stetigen Akkumulierung von Chlorid im Boden.

Der Natriumanteil akkumuliert noch stärker und führt zu Verschlämmungen und Verschichtungen des Bodens. Die Korrelation zwischen Ausmaß des Schadens und Natriumgehalt ist aber weniger ausgeprägt, als vielmehr die zwischen Schädigung und Natrium/Kalium-Verhältnis.

Wie Stickstoff oder Phosphor gehört auch Kalium zu den dreizehn essentiellen Pflanzennährstoffen. Durch Kalium können jedoch keine Eutrophierungserscheinungen auftreten, da es normalerweise nicht das limitierende Element darstellt.

Gemäß der DE-0S 29 33 318 ist die Verwendung von Natrium/Kaliumchlorid in Verbindung mit CaO, $CaCO_3$, MgO oder $MgCO_3$ bekannt. Auch hier sind jedoch große Mengen schädlicher Chloride neben unlöslichen Anteilen an Kalk und Dolomit enthalten. Viele Veröffentlichungen beschäftigen sich mit einer Korrosionsverminderung von Streusalz (NaCl), wie zB. durch Zusatz von 0,1 bis 10 % Kalkstickstoff gemäß DE-PS Nr. 28 47 350, wobei der Kalkstickstoff wohl die Metallkorrosion, nicht aber die schädlichen Wirkungen von NaCl auf Pflanzen, Tiere, Baustoffe usw. verringern kann.

Auf Grund der vorbeschriebenen Probleme mit chloridhaltigen Eislösern- und Gefrierschutzmitteln hat es seit langem Bestrebungen gegeben, andere Produkte heranzuziehen, wie Ammonsulfat, Harnstoff, Natriumnitrat. Solche Gemische mit verschiedenen Korrosionsinhibitoren werden z.B. in der AR-PS 191 383 sowie in der US-PS 2,980.620 beschrieben.

Ammonsalze, welche tiefere Eislöse- und Stockpunkttemperaturen im Wasser bewirken, können jedoch Beton, Mauerwerk und andere calciumhaltige Baustoffe, wie Betonfahrbahnen, Zufahrten, Kanäle usw. angreifen, wenn sie nicht mit entsprechenden Schutzstoffen/Inhibitoren versetzt werden.

Sulfate (ohne entsprechende Zusatzmittel) setzen sich mit dem Tricalciumaluminat des Zementsteines zu Ettrigit um und bewirken dadurch eine Volumsvergrößerung, wodurch es zu Treiben und Abplatzungen kommt.

Bei der Verwendung von organischen Eislöse- und Gefrierschutzmittel kann die Korrosionsgefahr leichter gebannt werden, da viele organische Verbindungen weniger aggressiv auf Werkstoffe wirken und auch durch Inhibitoren besonders bei Metallen korrosionsverhindernd eingestellt werden können. Neben wirtschaftlichen Fragen - organische Verbindungen sind meist erheblich teurer als gleich gefrierpunkterniedrigende anorganischer Natur - ergibt sich jedoch bei vielen Produkten das Problem des Umweltschutzes.

Es ist daher Aufgabe der Erfindung, den Angriff auf mineralische Werkstoffe wie Beton und auf metallische Werkstoffe durch Auftaumittel zu inhibieren und vorteilhafterweise die auszubringende Menge an Auftaumittel deutlich zu reduzieren, um dadurch die Belastung der Umwelt zu minimieren. Weiters soll das, für das Pflanzenwachstum sehr wichtige, Kalium/Natrium Verhältnis verbessert werden.

Das erfindungsgemäße Gefrierschutz- und Eislösemittel ist dadurch gekennzeichnet, daß das Mittel als Zusatz Kaliumcarbonat und wasserlösliches Alkalisilikat enthält. Für die Feuchtsalzstreuung liegt das Kaliumcarbonat und das Alkalisilikat als Zusatz in Form einer wässrigen Lösung und das Auftaumittel pulverförmig oder als Granulat vor, wobei bevorzugt der Zusatz als wässrige Lösung bis zu 50 Gew. % Kaliumcarbonat und bis zu 30 Gew.% Alkalisilikat, bezogen auf das Gewicht der Lösung, enthält. Die Menge des Zusatzes als Lösung liegt bevorzugt zwischen 10 und 30 Gew.%, bezogen auf das Gewicht des Auftaumittels. Alternativ kann das Auftaumittel und der Zusatz mit dem Kaliumcarbonat und dem Alkalisilikat als Pulver- oder Granulatgemisch vorliegen, wobei der Zusatz in einer Menge zwischen einschließlich 1 und 50 Gew.%, bezogen auf das Gewicht des Auftaumittels, liegt.

Das Alkalisilikat ist bevorzugt in einer Menge zwischen 1 und 10 Gew. % enthalten und der Rest auf 100 Gew. % ist überwiegend Kaliumcarbonat. Bezogen auf das Gesamtgewicht des Gefrierschutz- und Eislösemittels kann der pulver- oder granulatförmige Zusatz in einer Menge von 1 bis 50 Gew. % vorliegen. Bevorzugt sind Natrium- und Kaliumsilikate.

Der erfindungsgemäße Zusatz ohne Auftaumittel ist ebenfalls Gegenstand der Erfindung und ist wie zuvor gekennzeichnet. Das Verfahren zum Schutz von Flächen vor Vereisung oder zum Enteisen ist dadurch gekennzeichnet, daß dem Auftaumittel vor oder während des Sreuvorganges ein Zusatz wie oben definiert beigemischt wird.

Der Grund für die Entwicklung der bevorzugten Feuchtsalzstreuung war der Wunsch nach Minimierung der auszubringenden Streusalzmengen. Am Anfang der Entwicklung wurde versucht, Auftausalze in gelöster Form auf die Straßen zu sprühen. Durch dieses Verfahren konnten zwar kleinere Mengen (5g/m$^2$) wirksam ausgebracht, und Wehverluste verhindert werden, jedoch fehlte es an Reserven festen Taustoffes. Diese Reserven sind jedoch unbedingt notwendig, um bei dikkeren Eisschichten über den oberflächlichen (flächenhaften) Taueffekt hinaus auch eine gewisse Tiefenwirkung zu erzielen.

Als logische Konsequenz der erwähnten Nachteile entstand die moderne Feuchtsalzstreuung, bei der mit Flüssigphase benetztes Streusalz (Feststoff) ausgebracht wird. Eventuell ist auch die Beimengung von Splitt möglich.

Vorzugsweise wird demgemäß die Flüssigphase, eine mit Alkalisilikaten inhibierte Kaliumcarbonatlösung, mit festen Alkalichloriden kombiniert. Diese ausbalancierte Kombination führt einerseits zu der bereits erwähnten, besseren Umweltverträglichkeit, und liefert andererseits aber auch den unbedingt notwendigen Schutz von mineralischen Werkstoffen wie Beton, Zement, Metallen, Leichtmetallen usw.

Durch die Verwendung einer Kaliumcarbonatsole anstelle der üblichen Calcium- oder Natriumchloridsolen wird der Chloridanteil gesenkt und die bereits eingangs beschriebene Wirkung der Chloride auf die Vegetation verringert. Einen weiteren Vorteil der vorliegenden Erfindung stellt die, Aufbesserung des Kaliumgehaltes im Boden dar. Kalium ist ein unentbehrlicher Nährstoff für Pflanzen. Es fördert vor allem den notwendigen Quellungszustand der Plasmakolloide und aktiviert verschiedene Enzymsysteme. Eine etwaige Eutrophierung ist nicht zu befürchten, da Kalium im allgemeinen nicht das limitierende Element im Boden darstellt.

Um Feuchtsalzstreuung durchführen zu können, werden Streufahrzeuge mit einem Solebehälter und einer Dosiereinrichtung benötigt. Da aber nahezu alle modernen, heute in Verwendung befindlichen Streufahrzeuge über die benötigten technischen Voraussetzungen verfügen, stellen diese Anforderungen keine Probleme dar.

Die Vorteile der Feuchtsalzstreuung gegenüber den konventionellen Streumethoden sind in den Belangen der Verkehrssicherheit, des Umweltschutzes und auch der Wirtschaftlichkeit unübersehbar:

- Bindung des Salzstaubes; Verfrachtung des Streugutes in Seitenräume wird nahezu ausgeschlossen.
- Durch besseres Haftvermögen wird die Verweildauer des Streugutes auf der Fahrbahn vergrößert.
- Durch optimale Ausnutzung des Taustoffes kann die Streumenge deutlich verringert werden.
- Es können selbst kleine Streumengen (<10 g/m$^2$) wirksam ausgebracht werden.
- Die Reserve an festem Auftaumittel im Feuchtsalz ermöglicht neben der Oberflächentauung auch eine Zermürbung von dickeren Eisschichten durch die festen Salzkörner.
- Durch die Benetzung der Salzkörner und den damit verringerten Wehverlusten wird eine deutlich größere Streubreite (bis zu einer 3-streifigen Richtungsfahrbahn) ermöglicht.
- Durch die Verringerung der Streumenge erhöht sich die Reichweite der Streufahrzeuge deutlich.

Nachfolgend werden die durch Salze an porösen Baustoffen ausgelösten Schäden und deren Mechanismen erläutert. Die baustoffschädigenden Wirkungen werden vor allem durch zwei Mechanismen induziert.

- Schäden durch Gefügezerstörungen aufgrund von Druckwirkungen (zB. Kristallisations-, und Hydrationsdruck).
- Korrosionsschäden im Bereich von Bewehrungsstählen.

Die für den Baustoff schädlichen Druckwirkungen entstehen durch drei verschiedene Prozesse:

Das Zustandekommen des Kristallisationsdruckes kann wie folgt erklärt werden: Salze liegen im Normalfall im Baustoff als mehr oder weniger gesättigte Lösungen vor. Es ist bekannt, daß übersättigte Lösungen spontan auskristallisieren können. Da die Kristallisation mit einer Volumenszunahme verbunden ist, baut sich in den Poren des Baustoffes ein Sprengdruck (Kristallisationsdruck) auf. Eine Übersättigung entsteht durch die temperaturbedingte Verdunstung des Porenwassers und der dadurch steigenden Salzkonzentration. Die Größenordnung dieses Kristallisationsdruckes hängt natürlich von der Art und Konzentration des Salzes ab. Die Folge ist die Zerstörung des Porengefüges im Baustoff. Zur Erläuterung folgen die Kristallisationsdrücke der wichtigsten bauschädlichen Salze bei einer Temperatur von 0° C und bei 100 %iger Übersättigung:

| CaSO$_4$.½ H$_2$O | 33,5 N.mm$^{-2}$ |
| MgSO$_4$.1 H$_2$O | 27,2 N.mm$^{-2}$ |
| NaCl | 55,4 N.mm$^{-2}$ |

Der Hydratationsdruck entsteht durch die Fähigkeit der meisten Salze, über eine chemische Reaktion Hydratwasser aufnehmen zu können. Bei der Aufnahme des Kristallwassers kommt es abermals zu einer Volumsvergrößerung, welche sich als Sprengdruck äußert. Dadurch kommt es ebenfalls zu der bereits beschriebenen Schädigung des Porengefüges. Entscheidend für diesen Mechanismus ist einerseits die Menge Wasser, die das entsprechende Salz anlagern kann, und andererseits die Umwandlungstemperatur, bei der Hydratwasser aufgenommen bzw. abgegeben wird. Je tiefer diese Temperatur liegt, desto häufiger tritt der Hydratationswechsel auf und um so schwerwiegender ist die schädigende Wirkung dieses Salzes. In diesem Zusammenhang muß darauf hingewiesen werden, daß NaCl (da es keine Hydratbildung zeigt) an diesem Schadensmechanismus nicht beteiligt ist. Als Illustration wird der Hydratationsdruck von Calciumsulfat (Gips) bei 0°C und 100 % rel. Luftfeuchtigkeit angeführt.

$$CaSO_4 \cdot \text{½ } H_2O \rightarrow CaSO_4.2H_2O \ 219 \text{ N.mm}^{-2}$$

Ein zusätzlicher Sprengdruck entsteht durch die sogenannte chemische Korrosion. Bei dieser chemischen Reaktion kommt es, durch Einwirkung des "sauren Regens" zu einer Umwandlung der in Baustoffen enthaltenen Salzen. Der saure Regen entsteht u.a. bei der Verbrennung von, mit Schwefel verunreinigten Ölen und Kohle. Der enthaltene Schwefel wird zunächst zu Schwefeldioxid (SO$_2$) und Schwefeltrioxid (SO$_3$) oxidiert. Das Schwefeldioxid kann dabei in der Atmosphäre durch unterschiedliche Mechanismen ebenfalls zum Schwefeltrioxid oxidiert werden. Das Schwefeltrioxid ist wasserlöslich und bildet zusammen mit Wasser verdünnte Schwefelsäure (H$_2$SO$_4$).

$$S + O_2 \rightarrow SO_2$$

$$SO_2 + \text{½ } O_2 \rightarrow SO_3$$

$$SO_3 + H_2O \rightarrow H_2SO_4$$

Die Schwefelsäure gelangt durch Regen- oder Schmelzwasser in das Kapillarsystem des Baustoffes, wo schließlich die Bindemittel angegriffen und in Sulfate umgewandelt werden. Diese Umwandlung wird von einer dramatischen Volumszunahme begleitet, welche wieder einen Sprengdruck verursacht. Anhand der folgenden zwei Beispiele soll der Säureangriff auf Bindemittel illustriert werden. Die dabei auftretenden Volumszunahmen in Prozenten stehen in den Klammern neben den Reaktionsgleichungen.

$$H_2SO_4 + CaCO_3 + 2H_2O \rightarrow CaSO_4.2H_2O + H_2O + CO_2 \ (100 \text{ %})$$

$$H_2SO_4 + MgCO_3 + 7H_2O \rightarrow MgSO_4.7H_2O + H_2O + CO_2 \ (430 \text{ %})$$

Die Bewehrungen im Beton bringen diesen Baustoff die unbedingt notwendige Biegezugfestigkeit. Durch die hohe Alkalität des Baustoffes (pH ca. 12,5-12,8) bildet sich an der Stahloberfläche eine passivierende Oxydschicht, welche die Bewehrung vor dem Rosten schützt. Die korrosionsschützende Wirkung beschränkt sich auf einen pH-Bereich von ca. 9,5 bis 13. Durch äußere Einflüsse, wie zum Beispiel saurer Regen und CO$_2$ aus der Luft, kann der pH-Wert im Beton gesenkt werden (Dieser Vorgang wird als Carbonatisierung bezeichnet). Die Carbonatisierung läuft aber bei entsprechender Betonqualität so langsam ab, daß die Standfestigkeiten der Bauten mehrere hundert Jahre betrüge. Die tatsächliche Standfestigkeit wird jedoch aufgrund der im Beton bereits vorhandenen und von außen zusätzlich eindringenden Chloride durch punktuelle Korrosion stark beeinflußt. Diese Korrosion läuft fatalerweise relativ unabhängig vom herrschenden pH-Wert ab.

Die Aufgabe der vorliegenden Erfindung ist einerseits die bereits erwähnte Reduzierung der Streumittelmenge, und andererseits die Reduzierung bzw. Zurückdrängung der oben genannten Schadensmechanismen. Um die Wirkungsweise der Erfindung exemplarisch zu erläutern, werden im folgenden anhand eines Bindemittels ($CaCO_3$), die Schadensmechanismen dargestellt und die durch die Erfindung gewährleistete Prävention erläutert.

$$H_2SO_4 + CaCO_3 \rightarrow CaSO_4 + H_2O + CO_2$$

$$CaSO_4 + \tfrac{1}{2} H_2O \rightarrow CaSO_4 \cdot \tfrac{1}{2} H_2O \text{ (Kristallisationsdruck } 33,5 N.mm^{-2})$$

$$CaSO_4 \cdot \tfrac{1}{2} H_2O \rightarrow CaSO_4 \cdot 2H_2O \text{ (Hydratationsdruck } 219 \ N.mm^{-2})$$

Alle bereits besprochenen Schadensmechanismen beruhen darauf, daß zunächst salzhaltiges Wasser in die, im Beton vorliegenden Poren eindringt. Bereits bei diesem Schritt setzt die Wirkung des gemäß Erfindung enthaltenen Betonschutzmittel ein. Das Alkalisilikat reagiert mit den Calciumionen zu einem unlöslichen Silikat, schlägt sich an der Oberfläche nieder und verschließt somit die Poren (Insolubilisierung der Betonoberfläche). Dadurch wird weiteres Eindringen der Salzlösung in den Baustoff erschwert.

Dieser Schutzmechanismus bei Verwendung der erfindungsgemäßen Mittel läßt sich wie folgt erklären:

Metalle haben die Tendenz, im Kontakt mit Wasser oder Lösungen in ihre kationische Form überzugehen. Bei diesem Mechanismus wird die Tatsache ausgenutzt, daß es, wenn ein Metall $M^1$ (Na, K, etc.) in einem Elektrolyten auf ein anderes Metallion $M^2$ (Ca, Mg, Al, etc.) trifft, zu einer Ionensubstitutionsreaktion kommt. Dies ist der Fall, wenn die Ionisierungstendenz von $M^1$ größer als die von $M^2$ ist.

$$M^1(\text{undissoziiert}) + M^2 (\text{Ion}) \rightarrow M^1 (\text{Ion}) + M^2(\text{undissoziiert}) \tag{1}$$

Normalerweise reagieren wässerige Lösungen von Alkalisilikaten aufgrund der Hydrolyse stark alkalisch.

$$M^1_2SiO_3 + H_2O \rightarrow M^1_2Si_2O_5 + M^1OH \tag{2}$$

Wässerige Lösungen von Alkalisilikaten, wie $M^1_2SiO_3 = M^1_2O \cdot SiO_2$; $M^1_2Si_2O_5 = M^1_2O \cdot 2SiO_2$; $M^2O$, etc. aus dem Beton reagieren, wie zum Beispiel in Gleichung (3) beschrieben, mit Alkalisilikaten unter der Bildung von $M^2$-Silikaten und kolloidalen Kieselsäuren.

$$M^1_2Si_2O_5 + M^2O + H_2O \rightarrow M^2SiO_3 + SiO_2 + Si(OH)_4 + M^1OH \tag{3}$$

Hallogenionen wie $X^-$ reagieren mit $M^2$ unter der Bildung eines Komplexiones $M^2X^-_{m+1}$ (wobei m die Oxidationszahl des Metalles $M^2$ darstellt). Von diesem Komplexion wird angenommen, daß es sowohl die Hydrolyse als auch die Dehydratisierungsreaktion, wie in den Gleichungen (4) und (5) beschrieben, beschleunigt.

$$M^2X^-_{m+1} + H_2O \rightarrow M^2(OH)_m + X^- \tag{4}$$

$$M^2(OH)_m + M^1_2Si_2O_5 \rightarrow M^2Si_2O_5 + M^1OH \tag{5}$$

Nach der umweltbedingten Neutralisierung des Silikates durch $SO_3$ oder $CO_2$ aus der Luft, entsteht aus dem Alkalisilikat das gelförmige hydratisierte $SiO_2$ / $Si(OH)_4$, welches sich als Kolloid niederschlägt und ebenfalls zum Verschluß der Poren beiträgt. Diese abgeschiedenen Silikatschichten stellen aber keine gasdichte Hydrophobierung dar.

Die wichtigsten Funktionen, die durch die gegenständliche Erfindung übernommen werden, sind einerseits der Korrosionsschutz (Fahrzeugmetalle, Armierungsstähle, Leichtmetalle etc.) und andererseits der Oberflächenschutz von mineralischen Baustoffen wie zum Beispiel Beton. Durch die, in der Flüssigphase enthaltenen Alkalisilikate wird der Angriff auf Kraftfahrzeugmetalle drastisch inhibiert und damit ein Beitrag zur Erhaltung wertvollem Volksvermögens geleistet.

Bei der Flüssigphase kann es sich zum Beispiel um eine wässerige Lösung von ca. 3 bis 10 Gew. % Alkalisilikat ($M_2O/SiO_2$ ca. 1/1,0-3,9) und ca. 40 Prozent Kaliumcarbonat handeln. Im Gegensatz zu den bislang üblichen Solen (CaCl und NaCl) die nur bis etwa -20 °C eingesetzt werden konnten, ist die Anwendung des erfindungsgemäßen Mittels bis in Temperaturbereiche von unter -30 °C möglich. Das Kaliumcarbonat verleiht der Sole einen Stockpunkt von unter -35 °C. Um auch mit den herkömmlichen Systemen bei Temperaturen von bis zu -20 °C arbeiten zu können, mußten Calciumchloridsolen mit einer Konzentration von mindestens 30 Prozent verwendet werden. Es ist mittlerweile bekannt, daß hochkonzentrierte CaCl-Sole, wenn sie als alleiniges Auftaumittel auf die Straße gelangt, bei bestimmten, aber noch nicht näher bekannten Wetter- bzw. Luftverhältnissen eine deutliche Reduzierung der Fahrbahngriffigkeit verursachen kann. Um dieses Risiko, das auch durch Auslaufen der Sole bei defekten Tanks oder Leitungen auftreten kann, möglichst auszuschließen, wurde die Konzentration der Sole auf ca. 25 % begrenzt. Dadurch ist der Einsatz solcher bekannter Systeme auf einen Temperaturbereich von über -20 °C beschränkt.

Die nachfolgenden Beispiele sollen die Erfindung auszugsweise näher erläutern aber nicht beschränken:

**Anwendungsbeispiel 1:** Gemäß gegenständlicher Erfindung wurde als Zusatz die Flüssigphase in einem Konzentrationsbereich von ca. 5 bis 40 Prozent (vorzugsweise 10-30 Prozent) bezogen auf trockenes Natriumchlorid als Auftaumittel eingesetzt. Das bedeutet, daß bei der Ausbringung von 15 g erfindungsgemäßen Mittels per Quadratmeter und einer angenommenen Eisdicke von 1 mm nach erfolgtem Tauen eine ca. 0,18 %ige Kaliumcarbonatlösung mit einem pH von ca 10,27 (bestimmt in reinem Leitungswasser) vorliegen würde. Der geringe Alkaligehalt wird kurzfristig durch $SO_3$ (saurer Regen) und $CO_2$ aus der Luft neutralisiert.

**Beispiel 2:** Um die Auswirkung der gegenständlichen Erfindung bei längerer Einwirkung auf Beton zu testen, wurden prismenförmige Prüflinge während 6 Monaten in 3 %igen Lösungen des erfindungsgemäßen Gefrierschutz- und Eislösemittels in völlig gelöstem Zustand, bestehend aus Natriumchlorid und mit Alkalisilikaten beaufschlagter Kaliumcarbonatlösung, gelagert. Die Prüflösungen wurden monatlich erneuert. Um einen Vergleich zu erhalten, wurden weitere drei Prüflinge unter den selben Bedingungen in reinem Leitungswasser gelagert.

Eine optische Beurteilung der Prüflinge ergab, daß nach Beendigung des Testes alle Kanten und Ecken der Prismen geradlinig und scharfkantig waren.

Anschließend wurden die Prüflinge ein weiteres Monat bei 40 °C in einer 3%igen erfindungsgemäßen Lösung (wie bereits beschrieben) gelagert.

Nach der Prüfung waren alle Kanten und Ecken der Proben geradlinig und scharfkantig, Verwölbungen, Risse oder Abplatzungen traten nicht auf, was den gewünschten Effekt unter Beweis stellt.

**Beispiel 3:** Weiters wurden Betonprobekörper der Festigkeitsklassen B 160 (entspricht Wegbeton), B 300 (entspricht Straßenbeton) und B 500 (entspricht Brückenbeton) mit den Abmessungen 160 x 40 x 40 mm folgenden Versuchsbedingungen ausgesetzt:

1) 28 Tage in 3%iger Lösung gemäß Erfindung (in Wasser mit 10° dH) bei 40 °C

2) 28 Tage in 3%iger Lösung gemäß Erfindung (in Wasser mit 10° dH) mit Temperaturzyklus (8 Stunden bei 40 °C / 16 Stunden bei Raumtemperatur)

3) 28 Tage in Wasser (10° dH) bei 40 °C

4) 28 Tage in Wasser (10° dH) mit Temperaturzyklus (8 Stunden bei 40 °C / 16 Stunden bei Raumtemperatur)

Die optische Beurteilung zeigte, daß die Probekörper keine Abplatzungen aufwiesen; die Kanten und Ecken waren geradlinig und scharfkantig.

Die Prüfung der Biegezugfestigkeit erfolgte gemäß ÖNORM B 3310 (Portlandzement, Eisenportlandzement und Hochofenzement) und ergab im Durchschnitt für alle vier Versuche und den jeweils entsprechenden Prüfling in etwa gleiche Werte.

Aufgrund der oben beschriebenen Versuche kann also festgestellt werden, daß die Betonprobenkörper weder hinsichtlich der Qualität der Betonoberflächen und -kanten noch der Biegezugfestigkeitsdaten erkennbar geschädigt wurden.

Die folgenden Beispiele 4 bis 8 veranschaulichen erfindungsgemäße Zusätze und Stabilitätstests für diese Zusätze, die somit kein NaCl enthalten.

**Beispiel 4:** Die Bereitung des Zusatzes als Flüssigphase erfolgt durch Auflösen des festen Kaliumcarbonates im vorgelegten Leitungswasser. Anschließend wird unter leichtem Rühren eine ca. 50%ige Alkalisilikatlösung zugemischt.

**Beispiel 5:** Es wurden vier verschiedene Zusätze als Flüssigphasen für Korrosionstests hergestellt. Der Gehalt an Kaliumcarbonat war bei allen Solen konstant 40 %. Der Gehalt an Kaliumsilikat (Molverhältnis $K_2O/SiO_2$ = 1 / 2,2) wurde wie folgt variiert:

| Lösung 1 | 4 % Alkalisilikatlösung |
|----------|-------------------------|
| Lösung 2 | 6 % Alkalisilikatlösung |
| Lösung 3 | 8 % Alkalisilikatlösung |
| Lösung 4 | 10 % Alkalisilikatlösung |

**Beispiel 6:** Lösung 1 wurde bei 20 °C offen eine Woche lang auf etwaige Veränderungen beobachtet. Die Sole blieb jedoch über den gesamten Zeitraum hinweg stabil.

**Beispiel 7:** Lösung 1 wurde bei -18 °C eine Woche lang auf etwaige Veränderungen beobachtet. Die Sole blieb auch bei diesen Bedingungen über den gesamten Zeitraum hinweg stabil und zeigte keinerlei Kristallisierungstendenzen

**Beispiel 8:** Lösung 1 wurde bei -40 °C 12 Stunden auf etwaige Kristallisationserscheinungen beobachtet. Die Sole blieb über den gesamten Zeitraum hinweg unverändert.

**Beispiel 9:** Mit den Lösungen 2-4 wurde analog zu den Beispielen 2-4 vorgegangen. Es konnten ebenfalls keine Veränderungen der jeweiligen Flüssigphasen festgestellt werden.

**Beispiel 10:** Bei den Testflotten handelte es sich jeweils um 3 %ige Lösungen von Gewerbesalz (NaCl), welche mit verschiedenen Konzentrationen von Kaliumcarbonat und Alkalisilikat beaufschlagt wurden. Als Vergleich diente eine unbeaufschlagte 3 %ige Gewerbesalzlösung, also ohne Zusatz. Der Ansatz der Prüfflotten erfolgte in simuliertem Regenwasser von pH 5,5 (Spuren $CL^-$, $SO_4^{2-}$, $Ca^{2+}$, $H^+$ und $NH_4^+$). Als Kriterium für die Bewertung der Schutzfunktion wurden die Gewichtsverluste oder Zunahmen in mg pro Fläche (100 cm$^2$) mit der Zeit herangezogen.

Versuchsansätze:

    a) 3% Gewerbesalz in simuliertem Regenwasser
    b) 3% Gewerbesalz+1% Zusatz 0 in simuliertem Regenwasser
    c) 3% Gewerbesalz+1% Zusatz 6 in simuliertem Regenwasser
    d) 3% Gewerbesalz+1% Zusatz 10 in simuliertem Regenwasser

| Zusatz O: | 44 % | $K_2CO_3$ |
|-----------|------|-----------|
|  | 56 % | $H_2O$ |
| Zusatz 6 | 40 % | $K_2CO_3$ |
|  | 6 % | $K_2O/SiO_2 = 1 / 2,2$ (Lösung) |
|  | 54 % | $H_2O$ |
| Zusatz 10 | 40 % | $K_2CO_3$ |
|  | 10 % | $K_2O/SiO_2 = 1 / 2,2$ (Lösung) |
|  | 50 % | $H_2O$ |

Korrosion Eisenblech:

Ansatz a):    Der Prüfling zeigte eine über die Zeit linear verlaufende Gewichtsabnahme:

| 22 h | - 9,03 mg/100 cm$^2$ |
|------|----------------------|
| 47 h | - 16,38 mg/100 cm$^2$ |
| 90 h | - 26,00 mg/100 cm$^2$ |
| 120 h | - 32,24 mg/100 cm$^2$ |
| 193 h | - 50,40 mg/100 cm$^2$ |

Ansatz b):    Aufbau eines Korrosionsbelages bereits nach ca. 10 Stunden, der etwa bis 50 Stunden nach Versuchsansatz konstant blieb, dann jedoch stark vermehrt wurde:

| 22 h | + 5,00 mg/100 cm$^2$ |
|---|---|
| 47 h | + 6,15 mg/100 cm$^2$ |
| 90 h | + 15,45 mg/100 cm$^2$ |
| 120 h | + 23,00 mg/100 cm$^2$ |
| 193 h | + 54,00 mg/100 cm$^2$ |

Ansatz c): Keine Korrosionserscheinungen bis etwa 50 Stunden nach dem Ansatz, dann entstanden Ausblühungen über die, an sich keine Korrosionserscheinungen zeigende Metalloberfläche:

| 22 h | + 0.21 mg/100 cm$^2$ |
|---|---|
| 47 h | - 1,40 mg/100 cm$^2$ |
| 90 h | + 6,50 mg/100 cm$^2$ |
| 120 h | + 18,46 mg/100 cm$^2$ |
| 193 h | + 54,43 mg/100 cm$^2$ |

Ansatz d): Leichter Korrosionsbeginn wie bei Ansatz c) nach 30 Stunden

| 22 h | - 0,21 mg/100 cm$^2$ |
|---|---|
| 47 h | + 5,46 mg/100 cm$^2$ |
| 90 h | + 13,85 mg/100 cm$^2$ |
| 120 h | + 26,00 mg/100 cm$^2$ |
| 193 h | + 67,62 mg/100 cm$^2$ |

Korrosion Aluminiumblech:

Die Testlösungen a, c und d zeigten keinen Ansatz einer Korrosion über den Beobachtungszeitraum. Dies offenbar infolge Ausbildung einer passivierenden Schicht von Aluminiumoxiden (xnH$_2$O) bzw. Unangreifbarkeit der am Aluminiumblech vorhandenen Aluminiumoxidschichte.

Ansatz b): Sofortiger Beginn einer progressiven Auflösung von Aluminium, der erst nach ca. 25 Stunden durch Ausbildung einer passivierenden Schutzschicht zum Stillstand kommt, offensichtlich nach dem Verbrauch des lösungsbewirkenden Agens:

| 22 h | - 101 mg/100 cm$^2$ |
|---|---|
| 47 h | - 87 mg/100 cm$^2$ |
| 90 h | - 79 mg/100 cm$^2$ |
| 120 h | - 75 mg/100 cm$^2$ |
| 193 h | - 71 mg/100 cm$^2$ |

Die Gewichtszunahme bei den Eisenblech-Korrosionstests (Ansätze b), c) und d) kann durch die Ausbildung einer Schutzschicht erklärt werden. Diese Schutzschicht dürfte aus Eisen- Silizium-Carbonaten bestehen.
Weitere Beispiele für den Zusatz in Form der Flüssigphase:

**Beispiel 11:** 40 % K$_2$CO$_3$
10 % K$_2$O/SiO$_2$ = 1 / 1,0 (Lösung)
50 % Leitungswasser.

**Beispiel 12:** 35 % K$_2$CO$_3$
6 % K$_2$O/SiO$_2$ = 1 / 3,2 (Lösung)
59 % Leitungswasser

**Beispiel 13:** 40 % K$_2$CO$_3$
10 % K$_2$O/SiO$_2$ = 1 / 3,9 (Lösung)

50 % Leitungswasser

**Beispiel 14:** 40 % $K_2CO_3$
6 % $Na_2O/SiO_2$ = 1 / 1,0 (Lösung)
54 % Leitungswasser

**Beispiel 15:** 30 % $K_2CO_3$
3 % $Na_2O/SiO_2$ = 1 / 2,0 (Lösung)
67 % Leitungswasser

**Beispiel 16:** 35 % $K_2CO_3$
6 % $Na_2O/SiO_2$ = 1 / 3,3 (Lösung)
59 % Leitungswasser

Im folgenden werden exemplarisch einige pulverförmige Zubereitungen des Eislöse- und Gefrierschutzmittels beschrieben:

**Beispiel 17:** Herstellung einer Kaliumcarbonat-, Natriumsilikatmischung. Der Zusatz von festem Natriumsilikat erfolgt in einem Konzentrationsbereich von 1-10 % ($Na_2O/SiO_2$ = 1 / 1 bis 1 / 3,3).

**Beispiel 18:** 50 % Kaliumcarbonat/Natriumsilikat-Mischung (siehe Beispiel 17) 50 % NaCl

**Beispiel 19:** 30 % Kaliumcarbonat/Natriumsilikat-Mischung (siehe Beispiel 17) 70 % NaCl

**Beispiel 20:** 10 % Kaliumcarbonat/Natriumsilikat-Mischung (siehe Beispiel 17) 90 % NaCl

**Beispiel 21:** 1 % Kaliumcarbonat/Natriumsilikat-Mischung (siehe Beispiel 17) 99 % NaCl

**Patentansprüche**

1.  Gefrierschutz- und Eislösemittel mit einem Gehalt an gefrierpunkterniedrigenden, chlorhaltigen anorganischen Substanzen, wie NaCl, $MgCl_2$ oder $CaCl_2$, als Auftaumittel, **dadurch gekennzeichnet, daß** das Mittel als Zusatz ein Gemisch von Kaliumcarbonat und wasserlöslichem Alkalisilikat enthält.

2.  Mittel nach Anspruch 1, **dadurch gekennzeichnet, daß** für die Feuchtsalzstreuung das Kaliumcarbonat und das Alkalisilikat als Zusatz in Form einer wässrigen Lösung und das Auftaumittel pulverförmig oder als Granulat vorliegt.

3.  Mittel nach Anspruch 2, **dadurch gekennzeichnet, daß** der Zusatz als wässrige Lösung bis zu 50 Gew.% Kaliumcarbonat und bis zu 30 Gew.% Alkalisilikat, bezogen auf das Gewicht der Lösung, enthält.

4.  Mittel nach den Ansprüchen 1 bis 3, **dadurch gekennzeichnet, daß** die Menge des Zusatzes als Lösung zwischen 5 und 40 Gew.%, bevorzugt zwischen 10 und 30 Gew.%, bezogen auf das Gewicht des Auftaumittels liegt.

5.  Mittel nach Anspruch 1, **dadurch gekennzeichnet, daß** das Auftaumittel und der Zusatz mit dem Kaliumcarbonat und dem Alkalisilikat als Pulver- oder Granulatgemisch vorliegen.

6.  Mittel nach Anspruch 5, **dadurch gekennzeichnet, daß** der Zusatz in einer Menge zwischen einschließlich 1 und 50 Gew.%, bezogen auf das Gewicht des Auftaumittels, liegt.

7.  Mittel nach Anspruch 5 oder 6, **dadurch gekennzeichnet, daß** der Zusatz das Alkalisilikat in einer Menge zwischen 1 und 10 Gew.% enthält und der Rest auf 100 Gew.% überwiegend Kaliumcarbonat ist.

8.  Mittel nach einem der Ansprüche 5 bis 7, **dadurch gekennzeichnet, daß** der pulver- oder granulatförmige Zusatz in einer Menge von 1 bis 50 Gew.% bezogen auf das Gesamtgewicht des Gefrierschutz- und Eislösemittels vorliegt.

9.  Mittel nach einem der Ansprüche 1 bis 8, **dadurch gekennzeichnet, daß** das Alkalisilikat eine Zusammensetzung $M_2O/SiO_2$ mit einem Molverhältnis von 1/1 bis 1/3,3 aufweist, wenn M=Na, oder ein Molverhältnis von 1/1 bis 1/3,9 aufweist, wenn M=K ist.

10. Mittel nach einem der Ansprüche 1 bis 9, **dadurch gekennzeichnet, daß** das Alkalisilikat ein Natriumsilikat oder Kaliumsilikat ist.

11. Zusatz für Auftaumittel, insbesondere chlorhaltige Auftaumittel wie NaCl, MgCl$_2$ und CaCl$_2$, **dadurch gekenn-zeichnet, daß** er Kaliumcarbonat und wasserlösliches Alkalisilikat enthält.

12. Zusatz nach Anspruch 11, **dadurch gekennzeichnet, daß** er als wässrige Lösung vorliegt und bis zu 50 Gew.% Kaliumcarbonat und bis zu 30Gew.% Alkalisilikat, bezogen auf das Gesamtgewicht des Zusatzes in Lösung, enthält.

13. Zusatz nach einem der Ansprüche 11 oder 12, **dadurch gekennzeichnet, daß** er als homogenes Pulver- oder Granulatgemisch vorliegt und das Alkalisilikat in einer Menge zwischen 1 und 10 Gew.% enthält, sowie der Rest auf 100 Gew.% Kaliumcarbonat ist.

14. Zusatz nach einem der Ansprüche 11 bis 13, **dadurch gekennzeichnet, daß** das Alkalisilikat eine Zusammen-setzung M$_2$O/SiO$_2$ mit einem Molverhältnis von 1/1 bis 1/3,3 aufweist, wenn M=Na, oder ein Molverhältnis von 1/1 bis 1/3,9 aufweist, wenn M=K ist.

15. Zusatz nach einem der Ansprüche 11 bis 14, **dadurch gekennzeichnet, daß** das Alkalisilikat ein Natriumsilikat oder Kaliumsilikat ist.

16. Verfahren zum Schutz von Flächen vor Vereisung oder zur Enteisung, wobei ein, insbesondere chlorhaltiges, Auftaumittel bevorzugt im Feuchtstreuverfahren aufgetragen wird, **dadurch gekennzeichnet, daß** dem Auftaumittel vor oder während des Streuvorganges ein Zusatz gemäß einem der Ansprüche 11 bis 15 beigemischt wird.

## Claims

1. Anti-freeze and de-icing composition with a content of freezing point-reducing, chlorine-containing inorganic sub-stances such as NaCl, MgCl$_2$ or CaCl$_2$ as defrosting agent **characterised in that** the agent contains a mixture of potassium carbonate and water-soluble alkali silicate as additive.

2. Agent according to claim 1 **characterised in that** for scattering as a damp salt, the potassium carbonate and alkali silicate is present as an additive in the form of an aqueous solution and the de-frosting agent in powder form or as granules.

3. Agent according to claim 2 **characterised in that** the additive contains, as aqueous solution, up to 50% be weight of potassium carbonate and up to 30% by weight of alkali silicate, based on the weight of the solution.

4. Agent according to claims 1 to 3 **characterised in that** the quantity of the additive, as solution, is between 5 and 40% by weight, preferably between 10 and 30% by weight, based on the weight of the de-frosting agent.

5. Agent according to claim 1 **characterised in that** the de-frosting agent and the additive are present together with the potassium carbonate and the alkali silicate as a mixture in powder or granular form.

6. Agent according to claim 5 **characterised in that** the additive is present in a quantity of between 1 and 50% by weight inclusive, based on the weight of the de-frosting agent.

7. Agent according to claim 5 or 6 **characterised in that** the additive contains the alkali silicate in a quantity of between 1 and 10% by weight and the remainder to make 100% be weight consists predominantly of potassium carbonate.

8. Agent according to one of claims 5 to 7 **characterised in that** the additive in powder or granular form is present in a quantity of 1 to 50% by weight based on the total weight of the antifreeze and de-icing composition.

9. Agent according to 1 of claims 1 to 8 **characterised in that** the alkali silicate has an M$_2$O/SiO$_2$ composition with

a molar ratio of 1/1 to 1/3.3 when M=Na, or a molar ratio of 1/1 to 1/3.9 when M=K.

10. Agent according to one of claims 1 to 9 **characterised in that** the alkali silicate is a sodium silicate or potassium silicate.

11. Additive for defrosting agents, in particular chlorine-containing defrosting agents such as NaCl, MgCl$_2$ and CaCl$_2$ **characterised in that** it contains potassium carbonate and water-soluble alkali silicate.

12. Additive according to claim 11 **characterised in that** it is present as an aqueous solution and contains up to 50% be weight of potassium carbonate and up to 30% by weight of alkali silicate, based on the total weight of the additive in solution.

13. Additive according to one of claims 11 or 12 **characterised in that** it is present as a homogeneous mixture of powder or granules and contains the alkali silicate in a quantity of between 1 and 10% by weight and the remainder to make 100% by weight consists of potassium carbonate.

14. Additive according to one of claims 11 to 13 **characterised in that** the alkali silicate has an M$_2$O/SiO$_2$ composition with a molar ratio of 1/1 to 1/3.3 when M=Na, or a molar ratio of 1/1 to 1/3.9 when M=K.

15. Additive according to one of claims 11 to 14 **characterised in that** the alkali silicate is sodium silicate or potassium silicate.

16. Process for the protection of surfaces against icing up or for de-icing them according to which a defrosting agent, in particular a chlorine-containing one, is preferably applied by the damp scattering method, **characterised in that** an additive according to one of claims 11 to 15 is admixed to the defrosting agent before or during the scattering process.

## Revendications

1. Composition anti-gel et de dégivrage contenant des substances minérales chlorées abaissant le point de congélation, telles que NaCl, MgCl$_2$ ou CaCl$_2$, en tant que produit de décongélation, **caractérisée par le fait que** la composition contient, en tant qu'additif, un mélange de carbonate de potassium et de silicate de métal alcalin hydrosoluble.

2. Composition selon la revendication 1, **caractérisée par le fait que** pour le salage humide, le carbonate de potassium et le silicate de métal alcalin, en tant qu'additifs, sont sous forme d'une solution aqueuse et le produit de décongélation est sous forme de poudre ou de granulés.

3. Composition selon la revendication 2, **caractérisée par le fait que** l'additif, en tant que solution aqueuse, contient jusqu'à 50 % en poids de carbonate de potassium et jusqu'à 30 % en poids de silicate de métal alcalin, rapporté au poids de la solution.

4. Composition selon les revendications 1 à 3, **caractérisée par le fait que** la quantité d'additif sous forme de solution est comprise entre 5 et 40 % en poids, de préférence entre 10 et 30 % en poids, rapportée au poids du produit de décongélation.

5. Composition selon la revendication 1, **caractérisée par le fait que** le produit de décongélation et l'additif contenant le carbonate de potassium et le silicate de métal alcalin sont sous forme de poudre ou de granulés.

6. Composition selon la revendication 5, **caractérisée par le fait que** l'additif est présent à raison de 1 à 50 % en poids, rapporté au poids total du produit de décongélation.

7. Composition selon la revendication 5 ou 6, **caractérisée par le fait que** l'additif contient de 1 à 10 % en poids de silicate de métal alcalin, le complément jusqu'à 100 % en poids étant principalement du carbonate de potassium.

8. Composition selon une des revendications 5 à 7, **caractérisée par le fait que** l'additif sous forme de poudre ou de granulés est présent à raison de 1 à 50 % en poids rapporté au poids total de la composition anti-gel ou de dégivrage.

9. Composition selon une des revendications 1 à 8, **caractérisée par le fait que** le silicate de métal alcalin présente un rapport molaire $M_2O/SiO_2$ compris entre 1/1 et 1/3,3 lorsque M = Na, ou un rapport molaire compris entre 1/1 et 1/3,9 lorsque M = K.

10. Composition selon l'une des revendications 1 à 9, **caractérisée par le fait que** le silicate de métal alcalin est du silicate de sodium ou du silicate de potassium.

11. Additif pour produits de décongélation, en particulier de produits de décongélation chlorés tels que NaCl, $MgCl_2$ ou $CaCl_2$, **caractérisé par le fait qu'**il contient du carbonate de potassium et du silicate de métal alcalin hydrosoluble.

12. Additif selon la revendication 11, **caractérisé par le fait qu'**il se présente sous forme de solution aqueuse et qu'il contient jusqu'à 50 % en poids de carbonate de potassium et jusqu'à 30 % en poids de silicate de métal alcalin, rapporté au poids total de l'additif en solution.

13. Additif selon l'une des revendications 11 ou 12, **caractérisé par le fait qu'**il se présente sous forme de mélange homogène pulvérulent ou de granulés et qu'il contient de 1 à 10 % en poids de silicate de métal alcalin, le complément jusqu'à 100 % en poids étant du carbonate de potassium.

14. Additif selon l'une des revendications 11 à 13, **caractérisé par le fait que** le silicate de métal alcalin présente un rapport molaire $M_2O/SiO_2$ compris entre 1/1 et 1/3,3 lorsque M = Na, ou un rapport molaire $M_2O/SiO_2$ compris entre 1/1 et 1/3,9 lorsque M = K.

15. Additif selon une des revendications 11 à 14, **caractérisé par le fait que** le silicate de métal alcalin est du silicate de sodium ou du silicate de potassium.

16. Procédé de dégivrage ou de protection de surfaces contre le givre comprenant l'application de préférence par salage humide, d'un produit de décongélation, de préférence chloré, **caractérisé par le fait que** l'on introduit dans le produit de décongélation, avant ou après l'opération de salage, un additif selon l'une des revendications 11 à 15.